# EUROPEAN PATENT APPLICATION

(11) **EP 0 747 153 A1**
(43) Date of publication of application: **11.12.1996**
(21) Application number: 96109020.6
(22) Date of filing: 05.06.1996
(51) Int. Cl.: B22D 37/00, B22D 2/00, G01F 23/28, G01F 23/292, B22D 11/18

(54) **Facility for casting molten metallic materials having a laser sensor device to control the level of molten metal**

(30) Priority: 07.06.1995 IT PD950116
(71) Applicant: PROGELTA S.r.l., 35030 Rubano (Padova) (IT)
(72) Inventor: Grigoletto, Mario, 35143 Padova (IT)
(74) Representative: Modiano, Guido, Dr.-Ing.

(57) **Abstract**

A facility for casting molten metallic materials comprising a ladle and monitoring and control means that are adapted to adjust the operating parameters of the ladle. The facility is characterized in that the monitoring and control means comprise a laser sensor that is used as a distance measurement device to detect the level of molten metal.

## Description

The present invention relates to a facility that is particularly but not exclusively useful for casting molten metallic materials.

It is known that the production of metal parts by casting requires the monitoring and control of a large number of functional parameters.

Devices that are commonly known in the field as ladles are currently used in facilities for casting molten metallic materials.

A ladle is essentially constituted by a container, usually made of sheet metal lined internally with refractory, in which the molten metal to be cast, under pressure or not, is introduced through a throat.

The container is also connected, by means of a casting gate, to a sprue basin in which there is a casting hole through which the molten metal is cast into a snap flask mould that is appropriately moved by truck-mounted or equivalent means.

The casting hole is opened or closed by means of a plug.

The movement of the plug, which must allow passage of the molten metal according to rules that are sometimes rather complicated in relation to the type of metal, to the shapes, to the number of parts to be produced, to the cooling parameters, etcetera, is currently achieved by feedback under the control of signals detected by sensors that are dedicated to specific process parameters.

In particular, two laser sensors are currently adopted which are trained with mutually converging beams onto the casting bell of the snap flask mould and detect the level of the cast molten metal by means of the interference of said beams.

These laser devices measure the level of the molten metal inside the casting bell of the snap flask mould, linking it substantially to the angle formed by the two interfering laser beams.

Although these detection devices perform their tasks, they are not free from drawbacks.

In particular, laser sensors that operate by virtue of angle measurements must be placed above the casting bell and therefore close to the actual casting of the molten metal.

For laser sensors, which are rather delicate and temperature-sensitive, this position is highly critical and it is therefore necessary to provide, for these sensors, a considerable protection that leads to considerable constructive complications and to high costs and sometimes still does not ensure sufficient independence of the sensors with respect to the high temperatures that surround them.

The aim of the present invention is to provide a casting facility in which the laser sensor means are substantially not affected by the high casting temperatures of the molten metal.

In relation to this aim, an object of the present invention is to provide a casting facility in which the laser sensors in any case require less protection that those present in known facilities.

Another object of the present invention is to provide a casting facility whose costs are competitive with respect to those of known facilities.

Another object of the present invention is to provide a casting facility in which no further complications in relation to its operation are introduced.

Another object of the present invention is to provide a casting facility that is reliable and adaptable to the most disparate production requirements.

This aim, these objects, and others which will become apparent hereinafter are achieved by a facility for casting molten metallic materials, of the type that comprises a ladle and monitoring and control means that are adapted to adjust the operating parameters of said ladle, said facility being characterized in that said monitoring and control means comprise a laser sensor that is used as a distance measurement device to detect the level of molten metal.

Further characteristics and advantages of the present invention will become apparent from the description of an embodiment thereof, illustrated only by way of non-limitative example in the accompanying drawings, wherein:
figure 1 is a schematic view, with some parts shown as blocks, of a casting facility according to the invention;
figure 2 is a sectional orthographic projection view of a detail of the facility according to the invention;
figure 3 is a chart for adjusting the casting flow inside the snap flask mould.

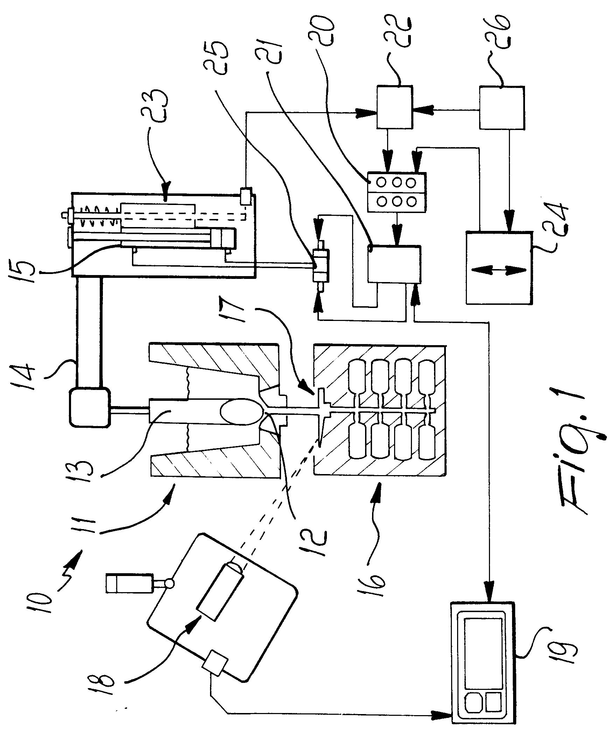

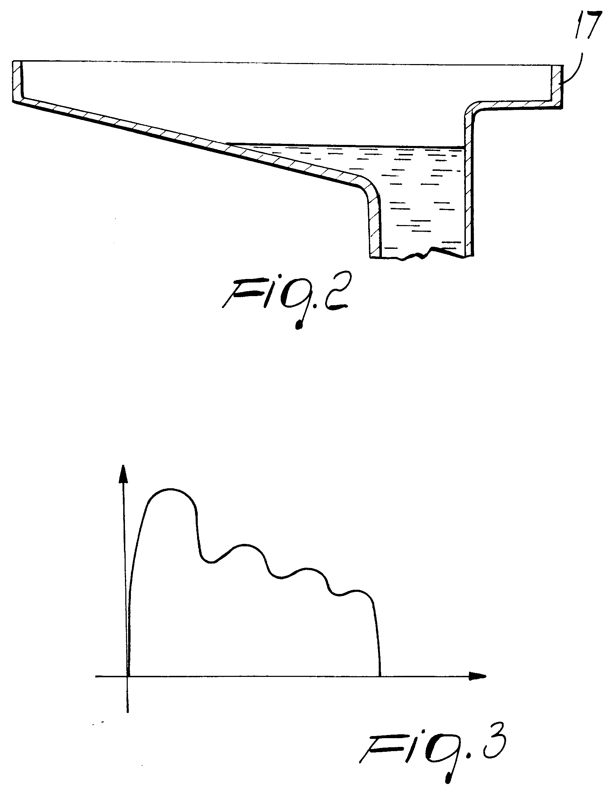

With particular reference to figures 1 to 3, a facility for casting molten metallic materials is generally designated by the reference numeral 10.

The facility 10 comprises a ladle, only the sprue basin of which, designated by the reference numeral 11, is shown in the figures.

The sprue basin 11 comprises, at its bottom, a casting hole 12 closed by a plug 13 that is actuated, by means of a rod 14, by actuator means 15.

A snap flask mould 16 is arranged below the casting basin 11 by virtue of truck-mounted means that are not shown in the figures; said snap flask mould forms a casting bell in its upper region.

The facility 10 comprises monitoring and control means that are adapted to adjust the operating parameters of the ladle, which in this embodiment comprise: a laser sensor 18 used as a distance measurement device, an electronic computer 19, a PLC device 20, an electronic board 21, a demodulator 22, a linear transducer 23, a joystick 24, a proportional valve 25, and a power supply 26.

In particular, the laser sensor 18 is trained on the casting bell 17 of the snap flask mould 16.

At the region where the laser sensor 18 is trained, the surface that forms the casting bell 17, is inclined so as to provide a higher ratio between the retraction distance and the lowering of the level of the molten cast metal.

With this solution, the laser sensor 18 can be arranged rather distant from the molten metal of the casting and this entails a reduction in its shielding.

The laser sensor 18 is connected, substantially in a feedback loop, so as to control the actuator means 15 and ultimately the plug 13, determining the behavior of the casting flow or, as a simple detector, contributing to servoregulation, according to preset rules, of the casting flow of the molten metal (see figure 3 in particular).

More specifically, the linear transducer 23 is connected to the actuator means 15, which are actuated by the proportional valve 25.

The linear transducer 23 is connected, by virtue of the demodulator 22, to the PLC device 20, which in turn controls, by means of the electronic board 21, the proportional valve 25 and therefore ultimately the actuator means 15.

The signals of the laser sensor 18, processed appropriately by the electronic computer 19, also reach the electronic board 21.

The signals of the joystick 24 also reach the PLC device 20; the joystick 24 and the demodulator 22 are powered by the power supply 26.

The above described embodiment is capable of providing four operating modes: automatic mode, controlled by the laser sensor; automatic mode with adjustable times and plug position; automatic mode with adjustable strokes and time; manual mode.

In the automatic mode with laser sensor, the laser sensor 18 is used as a distance measurement device and is therefore trained on the casting bell 17 of the snap flask mould 16, is appropriately adjusted and sends an analog signal that is proportional to the level of the molten metal.

The signal that leaves the laser sensor 18 is processed by calculating the arithmetic mean of the values; by processing this mean value one obtains an analog signal that is proportional to the level of the molten metal in the casting bell 17.

The signal that leaves the electronic computer 19 is then sent to the electronic board 21, which controls the proportional valve 25 and therefore ultimately controls the actuator means 15 and the plug 13.

The linear transducer 23 monitors, in real time, the position of the plug.

In case of operating anomalies, there are alarm means, not shown in the figures, that automatically disengage from operation the faulty components and generate acoustic and/or visual alarm signals.

In the automatic mode with times and plug position adjustable by virtue of appropriate control curves, of the type shown in figure 3, the opening positions of the plug 13, together with the corresponding hold times, are set.

The positions are in any case detected by the linear transducer 23.

By way of example, the data that are sent can be: the opening stroke, the flow time, the throttling strokes, and the total casting time.

In this operating mode, it is possible to vary the operating parameters by means of a keyboard; these parameters are effective immediately.

In the automatic operating mode with adjustable time-controlled strokes, the opening position with the corresponding hold times of the plug 13 are again set by means of control curves of the type shown in figure 3.

In this operating mode, too, it is possible to set, by way of example, the following parameters: the maximum opening stroke, the maximum flow time, the throttling strokes with the corresponding flow times, and the total casting time.

In this operating mode, by virtue of the joystick 24 it is possible to immediately change, at all times, the position of the plug even if this variation is not stored.

This operating mode, too, provides for alarm means and for their activation in relation to anomalous operating conditions.

In the manual actuation mode it is possible to control the opening and closure of the plug 13 directly, without referring to any preprogrammed casting cycle.

In all operating modes, in this embodiment of the plant, a casting start signal and a casting end signal are generated; moreover, on command it is possible to automatically clean the casting sleeve with an appropriate cleaning device, which is not shown in the figures and is of a per se known type.

In practice it has been observed that the intended aim and objects have been achieved; in particular, it should be noted that the problems related to the laser sensor have been eliminated substantially permanently; said laser sensor can be placed in the most appropriate region to prevent the high casting temperatures from affecting its data and sometimes damaging it.

It should also be noted that the casting facility according to the invention does not have further constructive complications and absolutely does not require requalification of the assigned technicians.

Furthermore, the solution according to the present invention does not entail further constructive complications and therefore keeps the costs of the facility substantially unchanged if not lower, since it is necessary to provide less shielding for the laser sensor.

The present invention is susceptible of numerous modifications and variations, all of which are within the scope of the inventive concept.

Furthermore, the components of the facility can be replaced with other technically equivalent components.

The materials and the dimensions may be any according to the requirements.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A facility for casting molten metallic materials, of the type that comprises a ladle and monitoring and control means that are adapted to adjust the operating parameters of said ladle, said facility being characterized in that said monitoring and control means comprise a laser sensor that is used as a distance measurement device to detect the level of molten metal.

2. A facility according to claim 1, characterized in that said laser sensor is trained on the casting bell of a snap flask mould.

3. A facility according to claim 2, characterized in that at least at the region where said laser is trained, the surface that forms said casting bell is inclined so as to provide a higher ratio between the retraction distance and the lowering of the level of the cast molten metal.

4. A facility according to claim 1, characterized in that said laser sensor is connected, in a feedback loop, so as to control closure means for closing the at least one casting hole of a sprue basin of said ladle.

5. A facility according to claim 4, characterized in that said closure means comprise at least one closure plug.

6. A facility according to claim 5, characterized in that said monitoring and control comprise a linear position transducer that is connected to said at least one closure plug.

7. A facility according to claim 6, characterized in that said monitoring and control means comprise a PLC device that is connected to a valve that in turn controls actuation means for moving said closure plug.

8. A facility according to claim 7, characterized in that said monitoring and control means comprise an electronic board that controls said valve, the signals of said laser sensor and of said PLC reaching said electronic board.

9. A facility according to claim 8, characterized in that said monitoring and control means comprise an electronic computer that processes the data in output from said laser sensor before they are fed into said electronic board.

10. A facility according to claim 7, characterized in that said monitoring and control means comprise a demodulator for the signals output by said linear transducer before they are fed to said PLC device.

11. A facility according to claim 10, characterized in that said monitoring and control means comprise a joystick that is connected to said PLC device in output.

12. A facility according to claim 10, characterized in that said monitoring and control means comprise power supply means for said joystick and said demodulator.
